# EUROPEAN PATENT SPECIFICATION

(11) **EP 0 853 011 B1**
(45) Date of publication and mention of the grant of the patent: **08.05.2002**
(21) Application number: 98300111.6
(22) Date of filing: 08.01.1998
(51) Int. Cl.: B60G 11/12, F16F 1/28, F16F 1/22

(54) **Leaf spring stabiliser**
Blattfederstabilisator
Stabilisateur pour ressort à lame.

(30) Priority: 09.01.1997 ZA 9700162
(43) Date of publication of application: 15.07.1998
(73) Proprietor: Lamberti, Antonette Irene, Inanda, Johannesburg (Gauteng Province) (ZA)
(72) Inventor: Lamberti, Antonette Irene, Inanda, Johannesburg (Gauteng Province) (ZA)
(74) Representative: Brookes Batchellor

(56) References cited:
- US-A- 1 733 365
- US-A- 1 747 725
- US-A- 1 911 866
- US-A- 1 939 444
- US-A- 2 259 827
- US-A- 2 324 997
- US-A- 2 333 183
- US-A- 2 492 416
- US-A- 2 505 733
- US-A- 3 177 005
- US-A- 3 491 994
- US-A- 3 514 089

## Description

### FIELD OF THE INVENTION

This invention relates to a stabiliser for a leaf spring and more particularly for a leaf spring providing suspension for a road vehicle.

### BACKGROUND TO THE INVENTION

Many road vehicles include the suspension for the rear axle in the form of a bowed leaf spring assembly between the chassis and each end of the rear axle.

These springs are designed to support a predetermined range of weight and loading. Frequently this design support is exceeded by loading the vehicle directly or by the securing of a trailer of one form or another to the vehicle.

Where such operating conditions are encountered it is known to include leaf spring stabilisers for each spring, Such stabilisers are known to include a further leaf spring blade mounted on top of the vehicle axle and having its ends connected to the leaf spring assembly.

These stabilisers have mitigated damage to the suspensions when overloaded but have had limitations. Some utilise a flexible connection between the stabiliser and spring assembly. Under conditions causing severe flexing of the spring assembly the stabilising effect is lost and failure of the spring assembly can occur.

Where the stabiliser is rigidly secured to the spring assembly the degree of flexing is limited and any movement beyond that limit can cause failure of the stabilising effect.

### OBJECT OF THE INVENTION

It is an object of the present invention to provide a spring stabiliser assembly in which the above difficulties are overcome to an appreciable degree.

US-A-2,492,416 and US-A-2,505,733 each disclose a leaf spring stabiliser unit in which a first stabilising leaf spring above the vehicle axle is connected to a second leaf spring beneath the vehicle axle by respective shackle assemblies at each end of the leaf springs. Each shackle assembly includes a central hollow spindle secured to a chassis support bracket, and a pair of shackles extending in opposing directions from the spindle to embrace the respective leaf springs. Each shackle includes a shackle pin that passes through the eye of the respective leaf spring.

US-A-1,747,725 discloses a vehicle leaf spring unit consisting of at least three sections, the action of the main spring section being normally opposed by the auxiliary spring sections but the action of the auxiliary springs being successively reversed in compression to assist the action of the main spring as the main spring is progressively compressed.

US-A-3,177,005 discloses a leaf spring hanger design in which one or both ends of the leaf spring nest inside a channel section frame member. A bushing extends through the eye of the spring and a spring hanger bolt extends through the bushing, the end of the bolt being secured in such a manner that the leaf spring is mounted without a conventional spring hanger bracket.

According to the present invention there is provided a vehicle spring stabilizer unit comprising a leaf spring for mounting above the vehicle axle, a connector pivotally secured at each end of the leaf spring for connecting the leaf spring to a vehicle spring assembly below the vehicle axle, each connector including a pair of opposed members for embracing the vehicle spring assembly, characterised in that the said members are rigidly spaced apart by a spacer to permit relative translational movement between the members and the vehicle spring assembly when the leaf spring is flexed, the relative movement being accommodated by an anti-friction member disposed between the spacer and the vehicle spring assembly.

Preferably the connector is in the form of a yoke engageable around the vehicle leaf spring assembly and the anti-friction member is a rotatable sleeve on the spacer disposed between the arms of the yoke.

The arms of the yoke may be connected at one end by a first bolt carrying the spacer on which is mounted the rotatable sleeve, and at the other end by a second bolt extending through an eye of the leaf spring.

In one alternative embodiment, the first bolt is stepped or provided with a self-locking nut to provide the spacer.

These and other features of this invention will become apparent from the following description of one example of a spring stabiliser embodying the invention. In this description reference will be made to the accompanying drawings in which:
Figure 1 shows the spring stabiliser in position is use; and
Figure 2 shows a transverse cross section through one end of the stabiliser.

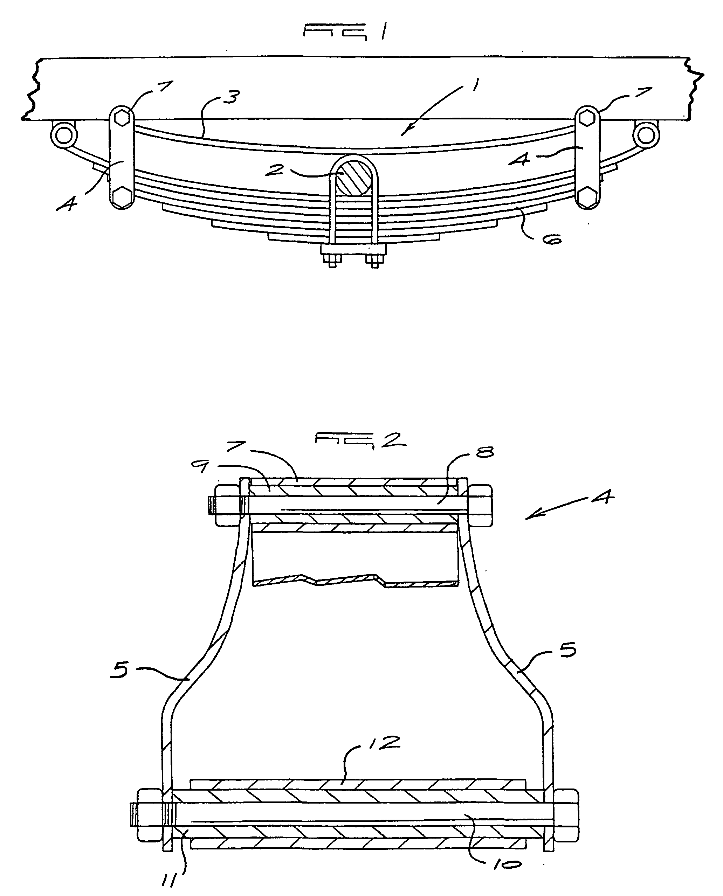

As illustrated the spring stabiliser (1) is mounted above the vehicle axle (2) and consists of a leaf spring (3) and connectors (4) at each end of the spring (3).

Each connector (4) consists of a pair of side arms (5) forming a yoke engaged around the vehicle leaf spring assembly (6). The upper ends of the arms (5) are connected together and pivotally secured to the eye (7) of the leaf spring (3) by a bolt (8) passed through the arms (5) and the eye of the leaf spring (3). A bush (9) is mounted on the bolt (8) to facilitate relative rotational movement between the bolt (8) and the eye (7) of the leaf spring (3).

The lower ends of the arms (5) embrace the vehicle leaf spring assembly (6). The arms (5) are connected together by a bolt (10) on which is a spacer (11) which ensures that there can be. relative movement between the spring assembly (6) and the arms (5).

A sleeve (12) is rotatably mounted on the spacer (11).

With the spring stabiliser (1) mounted to the vehicle spring assembly (6) it will be appreciated that as the vehicle spring assembly (6) and leaf spring (3) flex under load during use there will be a small translational movement between the connectors (4) and the vehicle spring assembly (6). The small movement is sufficient to prevent damage to or failure of the stabiliser under severe conditions of use and is accommodated by rotation of sleeve (12) on the spacer (11) and against the vehicle spring assembly (6).

The embodiment above described can be varied in many ways without departing from the scope of the invention, the essential of which is that the connectors (4) can be positioned on a vehicle leaf spring assembly (6) to provide a limited movement between these components.

For example the bolt (8) securing the upper ends of the side arms (5) to the eye of the leaf spring (3) can be fitted with a special lock nut assembly to prevent relative movement of the components causing the nut to unscrew from the bolt. The lower ends of the arms can be held in spaced relationship in any convenient manner which will prevent them from being clamped tight against the side of the vehicle leaf spring assembly. A stepped bolt and self-locking nut can be used to ensure that this does not happen.

The invention provides a spring stabiliser which is simple but effective and reliable and not easily damaged during even severe working conditions.

## Claims

1. A vehicle spring stabilizer unit comprising a leaf spring (3) for mounting above the vehicle axle (2), a connector (4) pivotally secured at each end of the leaf spring for connecting the leaf spring to a vehicle spring assembly (6) below the vehicle axle (2), each connector (4) including a pair of opposed members (5) for embracing the vehicle spring assembly (6), **characterised in that** the said members (5) are rigidly spaced apart by a spacer (11) to permit relative translational movement between the members (5) and the vehicle spring assembly (6) when the leaf spring (3) is flexed, the relative movement being accommodated by an anti-friction member (12) disposed between the spacer (11) and the vehicle spring assembly (6).

2. A vehicle spring stabiliser unit as claimed in claim 1 **characterised in that** the connector (4) is a yoke having opposed arms (5) engageable around the vehicle spring assembly.

3. A vehicle spring stabiliser unit as claimed in claim 2 **characterised in that** the anti-friction member (12) is a rotatable sleeve on the spacer (11) disposed between the arms (5) of the yoke (14).

4. A vehicle spring stabiliser unit as claimed in claim 3 **characterised in that** the spacer (11) is carried on a bolt (10) connecting the arms (5) of the yoke.

5. A vehicle spring stabiliser unit as claimed in claim 4 **characterised in that** the bolt is stepped to form the spacer.

6. A vehicle spring stabiliser unit as claimed in claim 1 **characterised in that** the leaf spring (3) is secured at each end to the respective connector (4) by a bolt (8) having a bush (9) between the bolt and the leaf spring.

## Patentansprüche

1. Fahrzeugfederstabilisatoreinheit mit einer Blattfeder (3) zur Montage über der Fahrzeugachse (2), einem Verbinder (4), der schwenkbar an jedem Ende der Blattfeder befestigt ist, um die Blattfeder mit einem Fahrzeugfederaufbau (6) unter der Fahrzeugachse (2) zu verbinden, wobei jeder Verbinder (4) ein Paar von gegenüberliegenden Elementen (5) zum Umfassen der Fahrzeugfederanordnung (6) aufweist, **dadurch gekennzeichnet, dass** die Elemente (5) durch einen Abstandshalter (11) fest voneinander beabstandet sind, um eine relative Translationsbewegung zwischen den Elementen (5) und der Fahrzeugfederanordnung (6) zu ermöglichen, wenn die Blattfeder (3) gebogen wird, wobei die relative Bewegung durch ein reibungsminderndes Glied (12), das zwischen dem Abstandshalter (11) und der Fahrzeugfederanordnung (6) angeordnet ist, zugelassen wird.

2. Fahrzeugfederstabilisatoreinheit nach Anspruch 1, **dadurch gekennzeichnet, dass** der Verbinder (4) ein Joch mit gegenüberliegenden Armen (5) ist, die die Fahrzeugfederanordnung umfassen können.

3. Fahrzeugfederstabilisatoreinheit nach Anspruch 2, **dadurch gekennzeichnet, dass** das reibungsmindernde Glied (12) eine drehbare Hülse auf dem Abstandshalter (11) ist, die zwischen den Armen (5) des Jochs (14) angeordnet ist.

4. Fahrzeugfederstabilisatoreinheit nach Anspruch 3, **dadurch gekennzeichnet, dass** der Abstandshalter (11) von einem Bolzen (10) getragen wird, der die Arme (5) des Jochs verbindet.

5. Fahrzeugfederstabilisatoreinheit nach Anspruch 4, **dadurch gekennzeichnet, dass** der Bolzen abgestuft ist, um den Abstandshalter zu bilden.

6. Fahrzeugfederstabilisatoreinheit nach Anspruch 1, **dadurch gekennzeichnet, dass** die Blattfeder (3) an jedem Ende mit dem jeweiligen Verbinder (4) durch einen Bolzen (8) verbunden ist, der eine Buchse (9) zwischen dem Bolzen und der Blattfeder aufweist.

## Revendications

1. Unité de stabilisation de ressort de véhicule comportant un ressort à lame (3) destiné à être monté au-dessus de l'essieu de véhicule (2), un connecteur (4) fixé de manière pivotante à chaque extrémité du ressort à lame pour relier le ressort à lame à un ensemble de ressorts de véhicule (6) situé en dessous de l'essieu de véhicule (2), chaque connecteur (4) comportant une paire d'éléments opposés (5) destinés à étreindre l'ensemble de ressort de véhicule (6), **caractérisée en ce que** lesdits éléments (5) sont espacés de manière rigide par un écarteur (11) pour permettre un mouvement de translation relative entre les éléments (5) et l'ensemble de ressorts de véhicule (6) lorsque le ressort à lame (3) est infléchi, le mouvement relatif étant permis par un élément antifriction (12) disposé entre l'écarteur (11) et l'ensemble de ressorts de véhicule (6).

2. Unité de stabilisation de ressort de véhicule selon la revendication 1, **caractérisée en ce que** le connecteur (4) est un étrier ayant des bras opposés (5) pouvant venir en contact autour de l'ensemble de ressorts de véhicule.

3. Unité de stabilisation de ressort de véhicule selon la revendication 2, **caractérisée en ce que** l'élément antifriction (12) est un manchon rotatif situé sur l'écarteur (11) disposé entre les bras (5) de l'étrier (14).

4. Unité de stabilisation de ressort de véhicule selon la revendication 3, **caractérisée en ce que** l'écarteur (11) est supporté sur un boulon (10) reliant les bras (5) de l'étrier.

5. Unité de stabilisation de ressort de véhicule selon la revendication 4, **caractérisée en ce que** le boulon est étagé pour former l'écarteur.

6. Unité de stabilisation de ressort de véhicule selon la revendication 1, **caractérisée en ce que** le ressort à lame (3) est fixé à chaque extrémité sur le connecteur respectif (4) par un boulon (8), une bague (9) étant située entre le boulon et le ressort à lame.
